# EUROPEAN PATENT SPECIFICATION

(11) **EP 4 012 247 B1**
(45) Date of publication and mention of the grant of the patent: **25.06.2025**
(21) Application number: 20849458.3
(22) Date of filing: 13.05.2020
(51) Int. Cl.: F17C 1/06, F17C 13/12, B29C 70/32

(54) **PRESSURE VESSEL AND MANUFACTURING METHOD THEREFOR**
DRUCKBEHÄLTER UND HERSTELLUNGSVERFAHREN DAFÜR
RÉCIPIENT SOUS PRESSION ET SON PROCÉDÉ DE FABRICATION

(30) Priority: 07.08.2019 KR 20190095898
(43) Date of publication of application: 15.06.2022
(73) Proprietor: Iljin Hysolus Co., Ltd., Jeollabuk-do 55322 (KR)
(72) Inventor: PARK, Min Uk, Wanju-gun, Jeollabuk-do 55322 (KR); YOO, Gye Hyung, Wanju-gun, Jeollabuk-do 55322 (KR)
(74) Representative: HGF
(86) International application number: PCT/KR2020/006297
(87) International publication number: WO 2021/025267

(56) References cited:
- EP-A1- 3 306 174
- JP-A- 2006 300 139
- JP-A- 2008 106 879
- JP-A- 2012 096 381
- JP-A- 2012 096 381
- KR-B1- 101 846 733
- US-A1- 2017 268 724
- US-A1- 2017 274 603

## Description

### [Technical Field]

The present invention relates to a method of manufacturing a pressure vessel that achieves improvement in flame retardancy and fire safety through structural characteristics thereof.

### [Background Art]

A pressure vessel means a closed container that receives a constant fluid pressure on an inner or outer surface of the container. Such a pressure vessel is typically used as a fluid handling vessel for various chemical processes. Fluid handling containers in chemical processes include towers, reactors, mixing tanks, heat exchangers, and storage containers as facilities for storing, separating, transporting, and mixing fluids for chemical processes, such as evaporation, absorption, distillation, drying, adsorption, and the like.

In recent years, facilities provided with the pressure vessel have been miniaturized together with increase in application of the pressure vessel to mobile devices, such as automobiles and the like. Accordingly, various methods of manufacturing a pressure vessel capable of guaranteeing light weight and improvement in properties while satisfying predetermined standards have been proposed.

In addition, various studies have also been made to develop a manufacturing method that can prevent fire and explosion due to overpressure in a pressure vessel in abnormal situations, such as fire or excessive reaction in chemical processes.

A typical pressure vessel is manufactured by forming a nozzle boss and a liner connected thereto using a metallic material, followed by winding or stacking fibers around the nozzle boss and the line. However, the pressure vessel formed of the metallic material has problems, such as difficulty in weight reduction, low corrosion resistance, low moldability, and high manufacturing costs, due to characteristics of metal.

To solve such problems, a synthetic resin can be used as the liner of the pressure vessel. In general, the liner formed of the synthetic resin is reinforced by forming a fiber layer on the liner through a loop winding method in which fibers are wound almost at right angles to an axis of a body of the liner, a helical winding method in which fibers are wound in an oblique direction to the axis of the body of the liner, or the like, as known in the art.

However, when the synthetic resin is used as the liner of the pressure vessel, it is still difficult to improve mechanical strength and shape uniformity of the pressure vessel, which can be poorer than a pressure vessel including a metal liner.

Therefore, there is increasing need for a technique capable of improving stability, moldability, and mechanical strength of the pressure vessel while satisfying preset standards.

The background technique of the present invention is disclosed in Korean Patent Laid-open Publication No. 10-2002-0095773.

Another example of a related apparatus and method can be found in US 2017 274 603 A1 (Mizuno KK) where a fiber-reinforced member is described, along with related methods. JP 2012 096381 A discloses the features of the preamble of claim 1.

### [Disclosure]

### [Technical Problem]

It is one aspect of the present invention to manufacture a pressure vessel that can guarantee good properties in terms of flame retardancy, mechanical strength and shape uniformity through structural characteristics thereof while achieving significant improvement in heat insulating properties, and a method of manufacturing the same.

It is another aspect of the present invention to manufacture a pressure vessel that can realize cost reduction while satisfying light weight, pressure resistance and fire safety.

### [Technical Solution]

1. One embodiment, not according to the present invention, relates to a pressure vessel including: a plastic liner; and a flame retardant composite resin layer formed on the plastic liner, wherein the flame retardant composite resin layer includes a first composite layer having resin-impregnated fiber aligned in a first direction and a second composite layer having resin-impregnated fiber aligned in a second direction different from the first direction; the resin-impregnated fiber aligned in the first direction and the resin-impregnated fiber aligned in the second direction form a contact region and an open region therebetween; and the contact region and the open region are formed in an area ratio of 1: 0.2 to 1.5.

In one embodiment, the resin-impregnated fiber may be wound to have a ratio of width to winding pitch in the range of 1:0.2 to 1:1.5.

In one embodiment, the plastic liner may include at least one thermoplastic resin selected from among a Nylon resin, an ethylene vinyl alcohol resin, a polyamide resin, a polyester resin, a polyolefin resin, a polycarbonate resin, a polyphenylene ether resin, and a polystyrene resin.

In one embodiment, the resin-impregnated fiber may be prepared by impregnating at least one of carbon fiber and glass fiber with a thermosetting resin.

In one embodiment, the thermosetting resin may include at least one selected from among an epoxy resin, a urethane resin, a phenolic resin, and an acrylic resin.

In one embodiment, the flame retardant composite resin layer may have a thickness of 0.1 µm to 5 µm.

In one embodiment, the resin-impregnated fiber may be impregnated with 20 vol% or more of the resin.

Another embodiment of the present invention relates to a method of manufacturing a pressure vessel as defined in claim 1.

In one embodiment, the flame retardant composite resin layer may be formed under a winding tension of 500 g to 10,000 g.

In one embodiment, the resin-impregnated fiber may be impregnated with 20 vol% or more of the resin.

In one embodiment, the plastic liner may include at least one thermoplastic resin selected from among a Nylon resin, an ethylene vinyl alcohol resin, a polyamide resin, a polyester resin, a polyolefin resin, a polycarbonate resin, a polyphenylene ether resin, and a polystyrene resin.

In one embodiment, the resin-impregnated fiber may be prepared by impregnating at least one of carbon fiber and glass fiber with a thermosetting resin.

In one embodiment, the thermosetting resin may include at least one selected from among an epoxy resin, a urethane resin, a phenolic resin, and an acrylic resin.

### [Advantageous Effects]

The present method according to the invention provides a pressure vessel that can guarantee good properties in terms of flame retardancy, mechanical strength and shape uniformity through structural characteristics thereof while achieving significant improvement in heat insulating properties, and can realize cost reduction while satisfying light weight, pressure resistance and fire safety, and a method of manufacturing the same.

### [Brief Description of Drawings]

FIG. 1 is a sectional view of a pressure.
FIG. 2 is a view of a fiber alignment structure of a flame retardant composite resin layer.
FIG. 3 is a view showing a contact region and an open region in the flame retardant composite resin layer according to the present invention.
FIG. 4 is a view of a first composite layer according to one embodiment of the present invention.
FIG. 5 is a view of a second composite layer according to one embodiment of the present invention.
FIG. 6 is a sectional view of the flame retardant composite resin layer according to the embodiment of the present invention.

### [Best Mode]\

One embodiment relates to a pressure vessel including: a plastic liner; and a flame retardant composite resin layer formed on the plastic liner, wherein the flame retardant composite resin layer includes a first composite layer having resin-impregnated fiber aligned in a first direction and a second composite layer having resin-impregnated fiber aligned in a second direction different from the first direction; the resin-impregnated fiber aligned in the first direction and the resin-impregnated fiber aligned in the second direction form a contact region and an open region therebetween; and the contact region and the open region are formed in an area ratio of 1: 0.2 to 1.5.

With this structure, the method of the present invention can guarantee good properties in terms of flame retardancy, mechanical strength and shape uniformity through structural characteristics thereof while achieving significant improvement in heat insulating properties, and can realize cost reduction while satisfying light weight, pressure resistance and fire safety.

Hereinafter, embodiments of the present invention will be described with reference to the accompanying drawings.

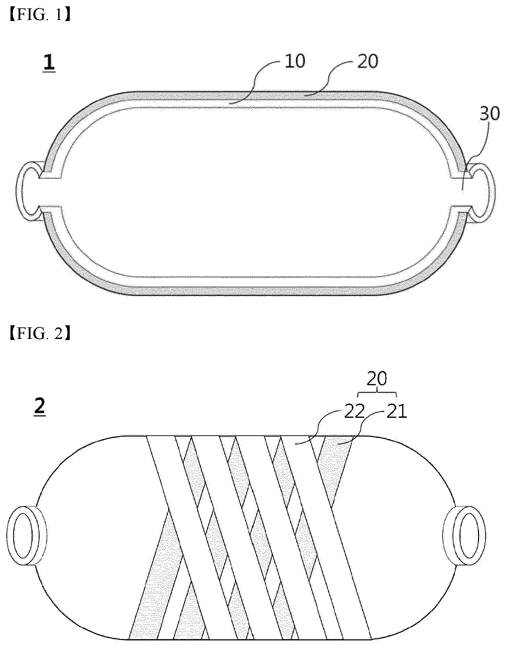

FIG. 1 is a view of a pressure vessel 1. Referring to FIG. 1, the pressure vessel 1 includes a plastic liner 10 and a flame retardant composite resin layer 20 formed on the plastic liner. In addition, the pressure vessel 1 may be provided with at least one nozzle boss 30 coupled to the plastic liner 10 and defining a path through which fluid is supplied to the pressure vessel 1 or discharged therefrom.

The plastic liner 10 is a container constituting the innermost layer of the pressure vessel 1 and provides a filling space to be filled with the fluid. In the pressure vessel 1 provided with the nozzle boss 30, the nozzle boss 30 may be integrally formed with the plastic liner 10 or may be coupled to an end portion of the plastic liner 10 through a fastening portion, such as a flange and the like.

Although not shown in the drawings, the nozzle boss 30 may be further provided with a thermal pressure relief device (TPRD), which is operated by heat upon generation of a fire. With this structure, the pressure vessel can further reduce a possibility of explosion in the event of significant damage to the flame retardant composite resin layer 20.

The plastic liner 10 may be formed of any plastic materials so long as the plastic materials are neither eroded by nor react with a target fluid. By use of a suitable plastic material, it is possible to achieve further improvement in weight reduction, pressure resistance and fire safety of the pressure vessel while reducing manufacturing costs thereof.

Specifically, the plastic liner 10 may be formed of at least one thermoplastic resin selected from among a Nylon resin, an ethylene vinyl alcohol resin, a polyamide resin, a polyester resin, a polyolefin resin, a polycarbonate resin, a polyphenylene ether resin, and a polystyrene resin. When these materials are used for the plastic material, the plastic liner can prevent deformation and damage to the pressure vessel due to pressure generated upon filling the plastic vessel with the fluid while realizing good mechanical strength.

The plastic liner 10 may have any shape so long as the plastic liner 10 can be applied to the pressure vessel. Specifically, the plastic liner may have a cylindrical shape with a dome shape at at least one end thereof. This structure is advantageous in uniform winding of a composite material, such as resin-impregnated fiber, on an outer peripheral surface of the plastic liner, and further improves pressure resistance of the pressure vessel.

The plastic liner 10 may have any thickness satisfying the manufacturing standards for the pressure vessel, which are consistent with the purpose of use thereof. Specifically, the plastic liner may have a thickness of 0.5 mm to 10 mm, more specifically 1 mm to 8 mm. Within this range, the plastic vessel can further reduce a minute variation in volume caused by the fluid in the plastic vessel while realizing good mechanical strength of the plastic vessel. For example, the plastic liner may have a thickness of 0.5 mm, 1 mm, 2 mm, 3 mm, 4 mm, 5 mm, 6 mm, 7 mm, 8 mm, 9 mm, or 10 mm.

The flame retardant composite resin layer 20 is formed on the outer surface of the plastic liner 10 and serves to reinforce and support the plastic liner while imparting chemical flame retardancy to the plastic liner. In addition, the flame retardant composite resin layer 20 serves to further improve insulating properties of the plastic vessel through structural characteristics in which a contact region and an open region have controlled areas, unlike a typical pressure vessel in the art.

In particular, with the structural characteristics in which the contact region and the open region have controlled areas, the flame retardant composite resin layer 20 includes an insulating layer, thereby suppressing damage to the flame retardant composite resin layer 20 while preventing detrimental local damage thereto upon generation of a fire. In this case, the pressure vessel can effectively reduce the risk of explosion even when a device, such as a safety valve, additionally provided to the pressure vessel does not work, while achieving significant improvement in fire safety.

FIG. 2 is a view of a fiber alignment structure of the flame retardant composite resin layer 20 according to the present invention. Referring to FIG. 2, the flame retardant composite resin layer 20 includes a first composite layer 21 having resin-impregnated fiber aligned in a first direction; and a second composite layer 22 having resin-impregnated fiber aligned in a second direction different from the first direction. For the first composite layer and the second composite layer, alignment means that the resin-impregnated fiber constituting a composite layer is wound along the outer peripheral surface of the plastic liner 10 plural times. The flame retardant composite resin layer 20 is wound around the entirety of the plastic vessel including not only a cylinder part of the plastic liner but also both dome-shaped ends of the pressure vessel.

In each of the first composite layer 21 and the second composite layer 22, the resin-impregnated fiber may be prepared by impregnating fiber with a resin and may be wound in a band shape.

In the first composite layer and the second composite layer, the resin-impregnated fiber forms a contact region and an open region therebetween by different alignment directions thereof. The flame retardant composite resin layer 20 is formed to have an area ratio of the contact region to the open region in the range of 1:0 to 1:1.5, specifically 1:0.2 to 1:1.5, whereby an insulating layer can be structurally formed in the flame retardant composite resin layer 20. If the area ratio of the contact region to the open region exceeds 1:1.5, it is difficult to form a uniform insulating layer due to an excessive area of the open region.

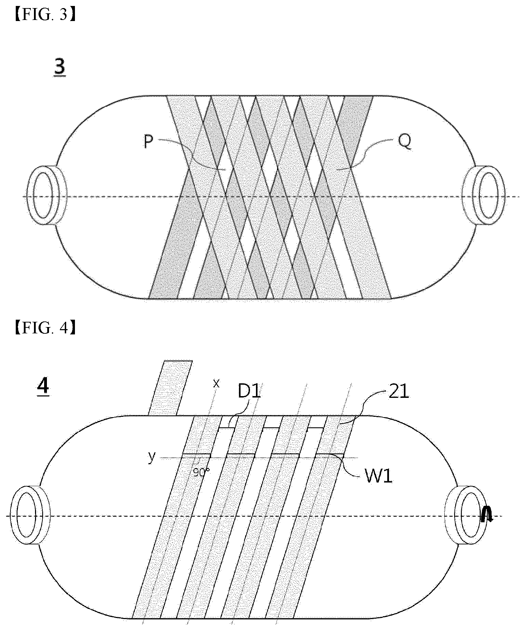

FIG. 3 is a view showing the contact region and the open region in the flame retardant composite resin layer according to the present invention. Referring to FIG. 3, the contact region refers to an area of a segment Q where the resin-impregnated fiber 21 of the first composite layer overlaps the resin-impregnated fiber 22 of the second composite layer on the plastic liner 10. In addition, the open region refers to an area of a segment P where the resin-impregnated fibers of the first composite layer and the second composite layer are not formed on the plastic liner 10.

In the flame retardant composite resin layer 20, a difference in alignment angle between the first direction in which the first composite layer 21 is aligned and the second direction in which the second composite layer 22 is aligned may be in the range of 5 degrees to 90 degrees, specifically 10 degrees to 80 degrees, more specifically 20 degrees to 60 degrees. Within this range, it is advantageous to control the areas of the contact region and the open region in the flame retardant composite resin layer.

In each of the first composite layer 21 and the second composite layer 22, the resin-impregnated fiber may be wound to have a ratio of width to winding pitch in the range of 1:0 to 1:1.5, specifically 1:0.2 to 1:1.5. The ratio of width to winding pitch of the resin-impregnated fiber of the first composite layer 21 may be the same as or different from the ratio of width to winding pitch of the resin-impregnated fiber of the second composite layer 22. Within this range, it is advantageous to achieve further improvement in fire safety through control of the areas of the contact region and the open region in the flame retardant composite resin layer.

The resin-impregnated fiber for the first composite layer 21 may be the same as or different from the resin-impregnated fiber for the second composite layer 22. Specifically, the resin-impregnated fiber may be prepared by impregnating at least one of carbon fiber and glass fiber with a thermosetting resin. As a result, the flame retardant composite resin layer can realize good mechanical strength while achieving significant weight reduction of the pressure vessel.

The thermosetting resin may be selected from among any thermosetting resins applicable to the pressure vessel. Specifically, the thermosetting resin may include at least one selected from among an epoxy resin, a urethane resin, a phenolic resin and an acrylic resin. As a result, the flame retardant composite resin layer 20 can realize good flame retardancy of the pressure vessel while securing light weight and mechanical strength of the pressure vessel, and can further improve adhesion between the first composite layer and the second composite layer and between the plastic liner 10 and the flame retardant composite resin layer 20.

In the first composite layer 21 and the second composite layer 22, the resin-impregnated fiber may be cured after winding. Here, curing is sequentially performed for the first composite layer 21 and the second composite layer 22 The first composite layer 21 may have the same degree of curing as or a different degree of curing from the second composite layer 22.

The resin-impregnated fiber may be impregnated with 20 vol% or more of the resin. Within this range, the pressure vessel can achieve further improvement in insulating properties and other properties. For example, the resin may he impregnated in an amount of 20 vol% to 99 vol%.

The flame retardant composite resin layer 20 may have any thickness satisfying the manufacturing standards for the pressure vessel, which are consistent with the purpose of use thereof. Specifically, the flame retardant composite resin layer 20 may have a thickness of 0.1 mm to 5 mm, more specifically 0.5 mm to 3 mm. Within this range, the plastic vessel can further reduce a minute variation in volume caused by the flame retardant composite resin layer while realizing good mechanical strength. For example, the flame retardant composite resin layer may have a thickness of 0.1 mm, 0.2 mm, 0.3 mm, 0.4 mm, 0.5 mm, 0.6 mm, 0.7 mm, 0.8 mm, 0.9 mm, 1 mm, 1.5 mm, 2 mm, 2.5 mm, 3 mm, 3.5 mm, 4 mm, 4.5 mm, or 5 mm.

**In** another embodiment, the flame retardant composite resin layer may have a thickness of 0.1 µm to 5 µm. Within this range, the plastic vessel can further reduce a minute variation in volume caused by the flame retardant composite resin layer while realizing good mechanical strength. Specifically, the flame retardant composite resin layer may have a thickness of 0.1 µm to 5 µm, more specifically 0.5 µm to 3 µm. For example, the flame retardant composite resin layer may have a thickness of 0.1 µm, 0.2 µm, 0.3 µm, 0.4 µm, 0.5 µm, 0.6 µm, 0.7 µm, 0.8 µm, 0.9 µm, 1 µm, 1.5 µm, 2 µm, 2.5 µm, 3 µm, 3.5 µm, 4 µm, 4.5 µm, or 5 µm.

The flame retardant composite resin layer 20 formed on the outer surface of the plastic liner reinforces and supports the plastic liner while imparting chemical flame retardancy to the plastic liner and further improving insulating properties of the plastic vessel through the structural characteristics in which the contact region and the open region of the flame retardant composite resin layer 20 have controlled areas, thereby further suppressing possibility of fire generation while preventing explosion of the pressure vessel upon fire generation. As a result, the pressure vessel can more effectively realize fire safety.

The present invention relates to a method of manufacturing a pressure vesse as defined in claim 1. For details of the pressure vessel, reference is made to the above description.

FIG. 4 is a view of a first composite layer according to one embodiment of the present invention. Referring to FIG. 4, the first composite layer is formed by winding the resin-impregnated fiber for the first composite layer along an outer peripheral surface of the plastic liner 10 plural times.

In the first composite layer 21, the resin-impregnated fiber may be wound to have a ratio of width W1 to winding pitch D1 in the range of 1:0 to 1:1.5, specifically 1:0.2 to 1:1.5. Within this range, the pressure vessel can reduce the weight while satisfying fire safety through control of the areas of the contact region and the open region in the flame retardant composite resin layer.

The width W1 and the winding pitch D1 of the resin-impregnated fiber mean distances measured in a direction y perpendicular to a central axis direction x of the resin-impregnated fiber.

The first composite layer is cured after winding. The degree of curing the first composite layer is not particularly limited. Specifically, the first composite layer may have a curing degree of 10% to 90%, more specifically 10% to 60%.

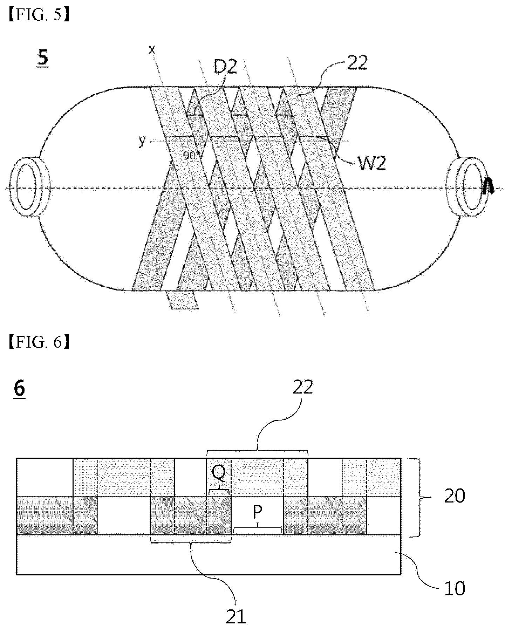

FIG. 5 is a view of a second composite layer according to one embodiment of the present invention. Referring to FIG. 5, the second composite layer is formed by winding the resin-impregnated fiber for the second composite layer along an outer peripheral surface of the first composite layer formed on the plastic liner 10 plural times.

The width W1 and the winding pitch D1 of the resin-impregnated fiber mean distances measured in the direction y perpendicular to the central axis direction x of the resin-impregnated fiber.

The second composite layer is cured after winding. The degree of curing the second composite layer is not particularly limited. Specifically, the second composite layer may have a curing degree of 10% to 100%, more specifically 50% to 90%.

The flame retardant composite resin layer may be formed under a winding tension of 500 g to 10,000 g. Specifically, the winding tension may be in the range of 1,000 g to 8,000 g, more specifically 1,500 g to 5,000 g. Within this range, it is more advantageous to control the areas of the contact region and the open region.

FIG. 6 is a sectional view of a flame retardant composite resin layer according to one embodiment of the present invention. FIG. 6 shows a cross-section of the pressure vessel taken along the center of a major axis in FIG. 3. Referring to FIG. 6, the flame retardant composite resin layer 20 includes an insulating layer formed through alignment of the contact region Q and the open region P of the first composite layer and the second composite layer.

In the method of manufacturing the pressure vessel according to the present invention, the flame retardant composite resin layer 20 has a multilayer structure of the first composite layer and the second composite layer in the contact region Q, thereby further improving pressure resistance in an axial direction and a radial direction while achieving thickness reduction of the pressure vessel. Further, since the area of the open region P of the first composite layer and the second composite layer is controlled, the pressure vessel can achieve further improvement in shape uniformity.

## Claims

1. A method of manufacturing a pressure vessel, comprising:
forming a flame retardant composite resin layer (20) by winding resin-impregnated fiber on an outer surface of a plastic liner (10),
wherein the flame retardant composite resin layer (20) comprises a first composite layer (21) having resin-impregnated fiber aligned in a first direction and a second composite layer (22) having resin-impregnated fiber aligned in a second direction different from the first direction, the first composite layer is cured after winding, and the second composite layer is cured after winding, **characterized in that** the curing is sequentially performed for the first composite layer and the second composite layer;
the resin-impregnated fiber aligned in the first direction and the resin-impregnated fiber aligned in the second direction form a contact region and an open region therebetween; and
the contact region and the open region are formed in an area ratio of 1:0.2 to 1:1.5.

2. The method of manufacturing a pressure vessel according to claim 1, wherein the resin-impregnated fiber is impregnated with 20 vol% or more of the resin.

3. The method of manufacturing a pressure vessel according to claim 1, wherein the plastic liner (10) comprises at least one thermoplastic resin selected from among a Nylon resin, an ethylene vinyl alcohol resin, a polyamide resin, a polyester resin, a polyolefin resin, a polycarbonate resin, a polyphenylene ether resin, and a polystyrene resin.

4. The method of manufacturing a pressure vessel according to claim 1, wherein the resin-impregnated fiber is prepared by impregnating at least one of carbon fiber and glass fiber with a thermosetting resin.

## Patentansprüche

1. Verfahren zur Herstellung eines Druckbehälters, umfassend:
Bilden einer flammhemmenden Verbundharzschicht (20) durch Aufwickeln von harzimprägnierter Faser auf eine Außenfläche einer Kunststoffauskleidung (10),
wobei die flammhemmende Verbundharzschicht (20) eine erste Verbundschicht (21) mit harzimprägnierter Faser, die in einer ersten Richtung ausgerichtet ist, und eine zweite Verbundschicht (22) mit harzimprägnierter Faser, die in einer zweiten Richtung ausgerichtet ist, die sich von der ersten Richtung unterscheidet, umfasst, die erste Verbundschicht nach Aufwickeln gehärtet wird und die zweite Verbundschicht nach Aufwickeln gehärtet wird,
**dadurch gekennzeichnet, dass**
das Härten nacheinander für die erste Verbundschicht und die zweite Verbundschicht durchgeführt wird;
die harzimprägnierte Faser, die in der ersten Richtung ausgerichtet ist, und die harzimprägnierte Faser, die in der zweiten Richtung ausgerichtet ist, einen Kontaktbereich und einen offenen Bereich dazwischen bilden; und
der Kontaktbereich und der offene Bereich in einem Flächenverhältnis von 1:0,2 bis 1:1,5 gebildet sind.

2. Verfahren zur Herstellung eines Druckbehälters nach Anspruch 1, wobei die harzimprägnierte Faser mit 20 Vol.-% oder mehr des Harzes imprägniert ist.

3. Verfahren zur Herstellung eines Druckbehälters nach Anspruch 1, wobei die Kunststoffauskleidung (10) zumindest ein thermoplastisches Harz ausgewählt aus einem Nylonharz, einem Ethylenvinylalkoholharz, einem Polyamidharz, einem Polyesterharz, einem Polyolefinharz, einem Polycarbonatharz, einem Polyphenylenetherharz und einem Polystyrolharz umfasst.

4. Verfahren zur Herstellung eines Druckbehälters nach Anspruch 1, wobei die harzimprägnierte Faser durch Imprägnieren von zumindest einem von Kohlefaser und Glasfaser mit einem wärmehärtbaren Harz gefertigt wird.

## Revendications

1. Procédé de fabrication d'un récipient sous pression, comprenant :
la formation d'une couche de résine composite ignifuge (20) en enroulant une fibre imprégnée de résine sur une surface externe d'un revêtement en plastique (10),
dans lequel la couche de résine composite ignifuge (20) comprend une première couche composite (21) présentant une fibre imprégnée de résine alignée dans une première direction et une seconde couche composite (22) présentant une fibre imprégnée de résine alignée dans une seconde direction différente de la première direction, la première couche composite est durcie après enroulement, et la seconde couche composite est durcie après enroulement, **caractérisé en ce que**
le durcissement est réalisé séquentiellement pour la première couche composite et la seconde couche composite ;
la fibre imprégnée de résine alignée dans la première direction et la fibre imprégnée de résine alignée dans la seconde direction forment une région de contact et une région ouverte entre elles ; et
la région de contact et la région ouverte sont formées dans un rapport de surface de 1:0,2 à 1:1,5.

2. Procédé de fabrication d'un récipient sous pression selon la revendication 1, dans lequel la fibre imprégnée de résine est imprégnée avec 20 % en volume ou plus de la résine.

3. Procédé de fabrication d'un récipient sous pression selon la revendication 1, dans lequel le revêtement en plastique (10) comprend au moins une résine thermoplastique choisie parmi une résine Nylon, une résine éthylène alcool vinylique, une résine polyamide, une résine polyester, une résine polyoléfine, une résine polycarbonate, une résine polyphénylène éther et une résine polystyrène.

4. Procédé de fabrication d'un récipient sous pression selon la revendication 1, dans lequel la fibre imprégnée de résine est préparée en imprégnant au moins l'une d'une fibre de carbone et d'une fibre de verre avec une résine thermodurcissable.
